Europäisches Patentamt

European Patent Office

Office européen des brevets

(19)

(11) Veröffentlichungsnummer: **0 002 218**
**B1**

(12) **EUROPÄISCHE PATENTSCHRIFT**

(21) Anmeldenummer: **78101400.6**

(22) Anmeldetag: **18.11.78**

(51) Int. Cl.³: **C 08 G 63/18,**
**C 08 G 63/22,**
**C 08 L 67/02**

(54) Verfahren zur Herstellung aromatischer Polyester

(30) Priorität: **29.11.77 DE 2753230**

(43) Veröffentlichungstag der Anmeldung:
**13.06.79 Patentblatt 79/12**

(45) Bekanntmachung des Hinweises auf die Patenterteilung:
**23.07.80 Patentblatt 80/15**

(84) Benannte Vertragsstaaten:
**DE FR GB**

(56) Entgegenhaltungen:
**DE - A - 1 745 695**
**DE - A - 2 749 062**
**GB - A - 924 607**

(73) Patentinhaber: **Bayer AG**
**Zentralbereich Patente, Marken und Lizenzen**
**D - 5090 Leverkusen 1, Bayerwerk (DE)**

(72) Erfinder: **Medem, Harald, Dr.**
**Buschstrasse 167**
**D - 4150 Krefeld (DE)**
**Freitag, Dieter, Dr.**
**Hasenheide 10**
**D - 4150 Krefeld (DE)**
**Reinking, Klaus, Dr.**
**Wustbacherstrasse 26a**
**D - 5632 Wermelskirchen (DE)**

Courier Press, Leamington Spa, England.

## Verfahren zur Herstellung aromatischer Polyester

Aromatische Polyester aus Diphenolen und aromatischen Dicarbonsäuren, insbesondere aus Bisphenol A (2,2 - Bis - 4 - hydroxyphenyl) - propan, und Gemischen von Terephthalsäure und Isophthalsäure besitzen sehr gute mechanische, thermische und dielektrische Eigenschaften, sind beständig und klar transparent. Von besonderen Wert ist ihre ther-mische Beständigkeit und hohe Einfrier-temperatur. In diesen Eigenschaften wird sogar das Polycarbonat des Bisphenol A übertroffen.

Diese aromatischen Polyester sind Konstruktionswerkstoffe z.B. für Maschinenteile, Automobilteile, Gehäuse, Gefäße und Teile elektrischer Geräte. Sie können durch thermopla-stische Formgebung wie Spritzgeißen, Extru-sion und Pressen verarbeitet werden. Folien können aus Lösungen in Chlorkohlenwasserstoffen, z.B. Methylenchlorid, nach dem Gießenverfahren hergestellt wejden.

Ein bevorzugtes Verfahren für die Herstellung dieser Polyester ist die Schmelzumesterung. Aus der GB—PS 924.607 ist be-kannt, Dicarbonsäurediarylester mit Di-phenolen in Gegenwart von Umesterungs-katalysatoren durch Zusammenschmelzen und Abdestillieren von Phenol zu hochmolekularen Polykondensaten umzuestern. Dabei wird im Verlauf der Reaktion der Druck stark vermindert, bis zuletzt auf weniger als 0,1 Torr. Die Reaktionstemperatur liegt im Bereich von 150—350°C, vorzugsweise 200—320°C. Als Umesterungskatalysatoren sind u.a. n - Butyl - o - titanat, Antimontrioxid, Bleioxid, Zinkoxid und Hydroxide, Hydride und Phenolate der Alkali-und Erdalkalimetalle geeignet.

Aromatische Polyester haben außerordentlich hohe Schmelzviskositäten. In den üblichen Rührautoklaven können deshalb die für gute mechanische Eigenschaften erforderlichen Polykondensationsgrade nur mühsam und schlecht reproduzierbar erzielt werden.

Zur Herabsetzung der Schmelzviskosität wurde in der belgischen Patentschrift 607 557 vorgeschlagen, ein Gemisch von aliphatischen Dicarbonsäuren und aliphatischen Dihydroxyverbindungen zuzusetzen. Damit werden aber auch die Erwichungspunkte der Polyester herabgesetzt. Die Reaktivität der aliphatischen Dicarbonsäuren ist für einen quantitativen Einbau in dem Polyester zu gering, durch das frei-gesetzte Reaktionsweasser wird die Polykon-densation vorzeitig abgebrochen.

Auch durch den Vorschlag der DT—AS 17 45 695, während der Schmelzumesterung dem Reaktionsgemisch 15—120 Gew.-% eines Polyesters aus Terephthalsäure- und/oder Iso-phthalsäure-Einheiten sowie diprimären Di-alkoholen (z.B. Polyäthylenterephthalat) zu-zusetzen, wird die Schmelzviskosität der erhaltenen Polyester erniedrigt, aber gleichzeitig auch die Einfriertemperaturen. Die Polyester sind opak und damit ihre Anwendungsmölichkeiten erheblich eingeschränkt.

Gegenstand der Erfindung ist ein Verfahren zur Herstellung von thermoplastischen aromatischen Polyestern mit Einfriertemperaturen über 170°C, durch Umesterung und Polykonden-sation von Bisphenolen mit Diarylter-phthalaten und/oder Diarylisophthalaten in Gegenward von Katalysatoren, das dadurch gekennzeichnet ist, daß man vor oder während der Reaktion 10—25 Gew.-%, bezogen auf das Gesamtgewicht der Polykondensate, eines aromatischen Polycarbonates mit einem mittleren Molekulargewicht $M_n$ von ca. 600 bis 15 000 zusetzt. Das aromatische Polycarbonat kann vor Beginn der Polykondensation zugefügt werden oder während der Polykondensation bis zu dem Zeitpunkt, zu dem 90% der für rückständigen Umsatz berechneten Menge des Phenols abgespalten ist. Bevorzugt wählt man für die Zugabe einen Zeitpunkt zwischen der Abspaltung von 50% der berechneten Phenolmenge und 90% der berechneten Phenolmenge.

Bevorzugte erfindungsgemäß erhaltene aro-matische Polyester besitzen Einfriertempera-turen von 180 bis 240°C. Die Reaktanten werden bevorzugt in äquimolaren Mengen eingesetzt.

Durch das erfindungsgemäße Verfahren können reproduzierbar hochmolekulare Polyester hergestellt werden, die sich durch gute Verarbeitbarkeit, hohe Einfriertemperatur, mechanische Festigkeit und klare Transparenz auszeichnen.

Als Biphenole werden bevorzugt verwendet: Bisphenol A (2,2 - Bis - (4,4' - Dihydroxy-diphenyl) - propan, Tetramethylbisphenol A, 1,1 - Bis - (4 - hydroxyphenyl) - isobutan, 1,1 - Bis - (4 - hydroxyphenyl) - cyclohexan, 4,4' - Dihyroxydiphenyl - sulfid, 4,4' - Dihydroxydiphenyl sowie deren di- und tetrahalogenierten Derivate. Besonders bevorzugt ist Bisphenol A. Als Diarylterephthalate und Isophthalate sind bevorzugt die Phenyl-, Kresyl-und Naphthylester; insbesondere die Phenylester. Besonders bevorzugt sind Gemische aus 30—70 Mol-% Isophthalsäure- und 70—30 Mol-% Terephthalsäure-Estern.

Die aromatischen Polycarbonate können prinzepiell aus beliebigen Bisphenolen aufgebaut sein. Es ist jedoch zweckmäßig, Poly-carbonate zu verwenden, deren Einfriertem-peraturen zwischen 130 und 250°C liegen. Besonders geeignet sind Homo- und Copolycarbonate aus den oben aufgeführten Bisphenolen; besonders bevorzugt ist Bisphenol A—Polycarbonat.

Das mittlere Molekulargewicht $\overline{M}_n$ (Zahlen-mittel) der einzusetzenden Polycarbonate ist 600 bis 15000. Bei höheren Molekulargewichten ist die Erniedrigung der Schmelzviskosität zu gering, um von praktischen Nutzen zu sein.

Die Menge der zuzusetzenden Polycarbonate ist 10 bis 25 Gew.-%, bezogen auf das Gesamtgewicht der Polykondensate (aromatischer Polyester+aromatisches Polycarbonat).

Den Schmelzen können zu beliebigen Zeitpunkten Stabilisatoren, wie z.B. Phosphite, UV-Absorber, Antioxydantien, Entformungshilfsmittel oder andere Additive, sofern sie mit den Polymermassen verträglich sind, zugesetzt werden.

Nach beendeter Polykondensation können die Produkte durch Schmelzextrusion und anschließendes Granulieren zu einem einheitlichen Granulat verarbeitet werden. Sie können aber auch direkt durch Spritzgießen zu Formkörpern verarbeitet werden. Sie sind ferner geeignet zur Herstellung von Folien und Überzügen.

Die relative Lösungsviskosität wird durch Messung, an einer 0,5 %igen Lösung in $CH_2Cl_2$ bei 25°C bestimmt; die Schmelzviskositäten in einem Hochdruckkapillarviskosimeter bei 300°C und 10 Umdrehungen/sec. die Einfriertemperatur wird im Differentialthermoanalysator bei einer Heizrate von 20°K/min. bestimmt.

### Beispiel 1

In einem 500 ml-Rundkolben mit Rührer und absteigendem Luftkühler wurden 114,15 g (0,5 Mol) Bisphenol A, 79,5 g (0,25 Mol) Diphenylterephthalat und 79,5 g (0,25 Mol) Diphenylisophthalat mit 5 mg Dinatriumbisphenolat unter Stickstoff bei 180°C aufgeschmolzen. Sodann wurde ein Vakuum von 100 Torr angelegt und 60 min. bei 220° und 30 min. bei 250°C umgeestert. Der Druck wurde auf 20 Torr vermindert, und weitere 60 min. wurde bei 250°C umgeestert. Zu diesem Zeitpunkt waren 84 % der berechneten Phenolmenge abdestilliert. Durch Einleiten von Stickstoff in die Apparatur wurde das Vakuum aufgehoben. Es wurden 20 g (= 10 Gew.-%) Granulat Bisphenol A-Polycarbonat mit einem. mittleren Molekulargewicht $\overline{M}_n$ von 12000 eingetragen. Nach erneutem Anlegen des Vakuums wurde 60 min. bei 280°C und 20 Torr und 60 min. bei 320°C und 0,1—1 Torr (Ölpumpenvakuum) weitergerührt und die Polykondensation zu Enge geführt.

Das erhaltene Produkt war außerordentlich hart, klar transparent und schwach gelblich gefärbt. die Lösungsviskosität $\eta_{rel}$ betrug 1,31, die Schmelzviskosität 6800 Pascalsekunden und die Einfriertemperatur 191°C.

### Vergleichsversuch 1a

Es wurde verfahren wie in Beispiel 1, aber kein Polycarbonat zugesetzt. Hierbei wickelte sich die Schmelze auf den Rührer auf und wurde nicht mehr ausreichend durchmischt. Das Endprodukt besaß eine Einfriertemperatur von 192°C, hatte jedoch nur eine $\eta_{rel}$ von 1,24 und konnte durch Hammerschläge zerkleinert werden.

### Vergleichsversuch 1b

Es wurde verfahren wie in Beispiel 1, aber anstelle des Polycarbonats die gleiche Gewichtsmenge Polyäthylenterephthalat mit einer Lösungsviskosität von 1,35 (gemessen als 1 %ige Lösung in Phenol/Tetrachloräthan 50:50 bei 25°C) eingetragen. Das erhaltene Produkt war opak, seine Lösungsviskosität betrug 1,28; die Schmelzviskosität 5900 Pas und di Einfriertemperatur 165°C.

### Beispiel 2

Es wurde verfahren wie im Beispiel 1, aber 45 g (= 20 Gew.-%) des Polycarbonates zugesetzt. Das erhaltene Endprodukt war hart, klar transparent, besaß eine Lösungsviskosität von $\eta_{rel}$=1,29, eine Schmelzviskosität von 5680 Pas und eine Einfriertemperatur von 184°C.

### Beispiel 3

Es wurde verfahren wie in Beispiel 2, aber ein Bisphenol A-Polycarbonat mit einem mittleren Molekulargewicht, $\overline{M}_n$ von 6200 zugeführt. Das erhaltene Produkt war hart, klar transparent, besaß eine Lösungsviskosität von 1,32 eine Schmelzviskosität von 3200 Pas und eine Einfriertemperatur von 187°C.

### Beispiel 4

Es wurde verfahren wie in Beispiel 1, aber ein Gemisch aus 111,3 g (0.35 Mol) Diphenylterephthalat und 47,7 g (0,15 Mol) Diphenylisophthalat eingesetzt und ein Copolycarbonat aus Bisphenol A und 4,4' - Dihydroxydiphenylsulfid (im Molverhältnis 60:40) mit dem mittleren Molekulargewicht $\overline{M}_n$ 12600 verwendet. Das erhaltene Produkt war hart, klar transparent, besaß eine Lösungsviskosität von 1,30, eine Schmelzviskosität von 2700 Pas, und eine Einfriertemperatur von 183°C.

## Patentansprüche

1. Verfahren zur Herstellung von thermoplastischen aromatischen Polyestern mit Einfriertemperaturen über 170°C durch Umesterung und Polykondensation von Bisphenolen mit Diarylterephthalaten und/oder Diarylisophthalaten in Gegenwart von Katalysatoren, dadurch gekennziechnet, daß man vor oder während der Reaktion 10—25 Gew.-%, bezogen auf das Gesamtgewicht der Polykondensate, eines aromatischen Polycarbonates mit einem mittleren Molekulargewicht von 600 bis 15000 zusetzt.

2. Verfahren nach Anspruch 1, dadurch gekennziechnet, daß man als Polycarbonat das Polycarbonat des Bisphenol A verwendet.

3. Verfahren nach Anspruch 1, dadurch gekennzeichnet, daß man für die Polykondensation Bisphenol A einsetzt.

4. Verfahren nach Anspruch 1, dadurch gekennzeichnet, daß man zur Umesterung ein Gemisch aus Diarylisophthalat und Diarylterephthalat im Molverhältnis 30:70 bis 70:30 einsetzt.

5. Verfahren nach Anspruch 1, dadurch gekennzeichnet, daß man Diphenylisophthalat und/oder Diphenylterephthalat einsetzt.

## Revendications

1. Procédé de préparation de polyesters aromatiques thermoplastiques ayant des températures de solidification supérieures à 170°C, par transestérification et polycondensation de bisphénols avec des téraphtalates et/ou isophtalates de diaryle en présence de catalyseurs, ledit procédé étant caractérisé en ce que l'on ajoute, avant ou pendant la réaction, 10 à 25 % en poids, par rapport au poids total des produits de polycondensation, d'un polycarbonate aromatique ayant un poids moléculaire moyen de 600 à 15 000.

2. Procédé selon la revendication 1, caractérisé en ce que l'on utilise comme polycarbonate le polycarbonate de bisphénol A.

3. Procédé selon la revendication 1, caractérisé en ce que l'on utilise le bisphénol A pour la polycondensation.

4. Procédé selon la revendication 1, caractérisé en ce qu'on utilise pour la transestérification un mélange d'isophtalate-téréphtalate de diaryle dans un rapport molaire de 30:70 à 70:30.

5. Procédé selon la revendication 1, caractérisé en ce qu'on utilise l'isophtalate et/ou le téréphtalate de diphényle.

## Claims

1. Process for the preparation of thermoplastic aromatic polyesters having glass transition temperatures above 170°C, by transesterification and polycondensation of bisphenols with diaryl terephthalates and/or diaryl isophthalates in the presence of catalysts, characterised in that before or during the reaction 10—25% by weight, relative to the total weight of the polycondensates, of an aromatic polycarbonate having an average molecular weight of 600 to 15,000, is added.

2. Process according to claim 1, characterised in that the polycarbonate used is the polycarbonate of bisphenol A.

3. Process according to claim 1, characterised in that bisphenol A is employed for the polycondensation.

4. Process according to claim 1, characterised in that a mixture of diaryl isophthalate and diaryl terephthalate in a molar ratio of 30:70 to 70:30 is employed for the trans-esterification.

5. Process according to claim 1, characterised in that diphenyl isophthalate and/or diphenyl terephthalate are used.